# FASCICULE DE BREVET EUROPEEN

(11) **EP 1 286 308 B1**
(45) Date de publication et mention de la délivrance du brevet: **29.11.2006**
(21) Numéro de dépôt: 02078321.3
(22) Date de dépôt: 12.08.2002
(51) Int. Cl.: G06T 15/00

(54) **Visualisation d'un montage d'une video panoramique par application de commandes de navigation a ladite video panoramique**
Panoramavideoeditieranzeige mit Navigationssteuerungsanwendung zu diesem Panoramavideo
Panoramic video editing visualisation by application of navigation control to said panoramic video

(30) Priorité: 14.08.2001 FR 0110807
(43) Date de publication de la demande: 26.02.2003
(73) Titulaire: Koninklijke Philips Electronics N.V., 5621 BA Eindhoven (NL)
(72) Inventeur: Mory, Benoît, 75008 Paris (FR); Santini, Nicolas, 75008 Paris (FR)
(74) Mandataire: Landousy, Christian

(56) Documents cités:
- WOOD D N ET AL: "MULTIPERSPECTIVE PANORAMAS FOR CEL ANIMATION" COMPUTER GRAPHICS PROCEEDINGS. SIGGRAPH 97. LOS ANGELES, AUG. 3 - 8, 1997, READING, ADDISON WESLEY, US, 3 août 1997 (1997-08-03), pages 243-250, XP000765822 ISBN: 0-201-32220-7
- PATENT ABSTRACTS OF JAPAN vol. 1999, no. 04, 30 avril 1999 (1999-04-30) & JP 11 009837 A (TAITO CORP), 19 janvier 1999 (1999-01-19)

## Description

### Domaine de l'invention

L'invention concerne un équipement de visualisation d'un montage vidéo par application de commandes de navigation à une vidéo panoramique, comportant un dispositif de contrôle destiné à être manipulé par un utilisateur pour définir des commandes de navigation au fur et à mesure de la visualisation.

L'invention concerne aussi un système de transmission comportant un tel équipement de visualisation.

L'invention concerne aussi un procédé de visualisation d'un montage vidéo par application de commandes de navigation à une vidéo panoramique, ainsi qu'un programme comportant des instructions pour la mise en oeuvre d'un tel procédé lorsqu'il est exécuté par un processeur.

Avec ce type d'équipements, l'utilisateur contrôle exactement ce qu'il veut voir dans un paysage à 360°. De tels équipements ont de nombreuses applications. Ils permettent par d'exemple de visualiser des films ou des programmes en ayant l'impression d'être dans l'action. Ils permettent aussi de proposer à un utilisateur des visites virtuelles interactives de sites variés, par exemple des visites virtuelles interactives de maisons, de musées...

### Arrière plan technologique de l'invention

La demande de brevet européen EP0930584A2 indique qu'il est possible pour un utilisateur de naviguer dans des images panoramiques en modifiant la position et l'orientation d'un point de vue qui définit un certain champ de vision.

Mais, lorsque l'utilisateur définit lui-même sa navigation, il risque de se perdre dans le programme. Ceci est particulièrement gênant lorsque l'utilisateur visualise des programmes tels que des films ou des retransmissions d'événements, parce qu'il risque alors de perdre le fil de l'action.

Un but de l'invention est de remédier à cet inconvénient.

### Résumé de l'invention

Ce but est atteint avec un équipement de visualisation, un procédé de visualisation, un programme et un système de transmission tels que respectivement revendiqués dans les revendications 1, 5, 7 et 8 de la présente demande.

Conformément à l'invention, un dispositif de sélection permet d'appliquer à la vidéo panoramique soit une navigation définie par l'utilisateur lui-même, soit une navigation prédéfinie.

Dans un premier mode de réalisation, la sélection est contrôlée par l'utilisateur. A titre d'exemple, l'utilisateur qui navigue librement dans une vidéo panoramique peut à tout instant choisir d'appliquer une navigation prédéfinie pour se recentrer sur l'action. Il peut ensuite reprendre la main lorsqu'il le souhaite.

Dans un second mode de réalisation, la sélection est contrôlée automatiquement. A titre d'exemple, une navigation prédéfinie est appliquée à certains instants prédéfinis, et entre ces instants prédéfinis, la navigation est librement définie par l'utilisateur.

On notera que la demande de brevet européen précitée EP0930584A2 indique aussi qu'une autre façon de créer une animation est de naviguer dans une suite de positions et d'orientations prédéfinies du point de vue. Mais ce mode de navigation élimine toute possibilité d'interaction pour l'utilisateur.

L'invention propose une utilisation combinée de commandes de navigation librement définies par l'utilisateur et de commandes de navigation prédéfinies. Elle permet ainsi de tirer partie des avantages de chacun des deux modes de navigation cités dans l'art antérieur.

Avantageusement, les commandes de navigation prédéfinies sont constituées par un ou plusieurs fichiers associés à ladite vidéo panoramique et contenant chacun une suite de commandes de navigation qui correspond à un montage particulier de la vidéo panoramique. Un tel fichier est par exemple un fichier de description de ladite vidéo panoramique dans lequel des paramètres de mouvement de caméra sont définis, lesdits paramètres de mouvement de caméra constituant lesdites commandes de navigation prédéfinies. Un tel fichier est par exemple conforme à la norme MPEG-7.

### Brève description des dessins

D'autres détails et avantages de l'invention apparaîtront dans la description qui va suivre, faite en regard des figures annexées données à titre d'exemples non limitatifs :
- la figure 1 est un schéma fonctionnel général d'un exemple d'équipement de visualisation selon l'invention,
- la figure 2 est un schéma fonctionnel d'un mode de réalisation préférentiel d'un équipement de visualisation selon l'invention,
- la figure 3 est un schéma en blocs d'un exemple de système de transmission selon l'invention.

### Description de modes de réalisation de l'invention

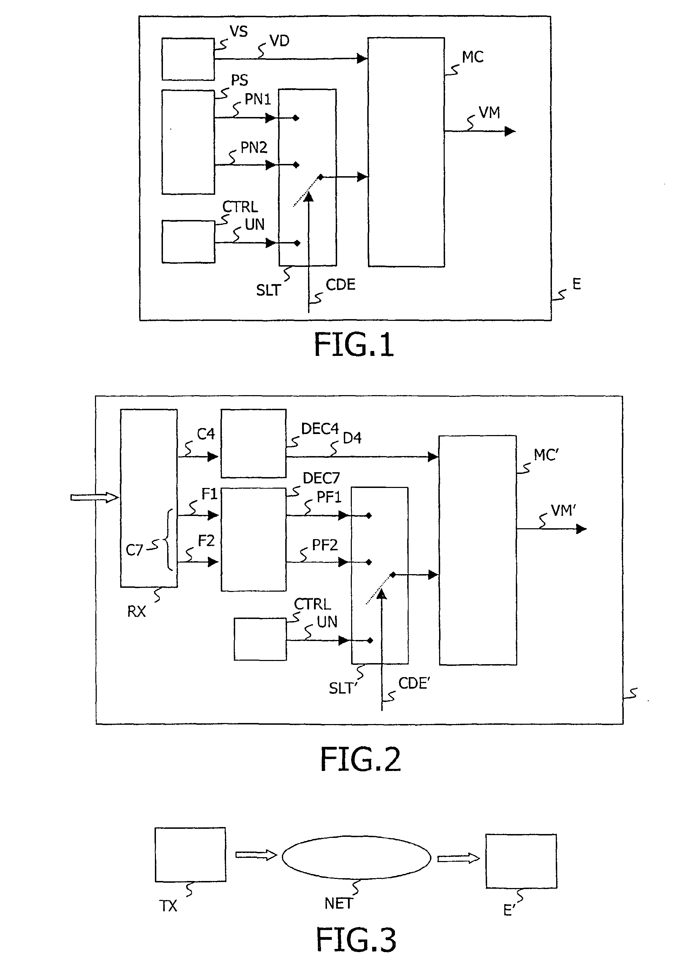

Sur la figure 1 on a représenté un schéma fonctionnel général d'un exemple d'équipement selon l'invention de visualisation d'un montage d'une vidéo panoramique par application de commandes de navigation à ladite vidéo panoramique.

L'équipement de visualisation E comporte une source VS de vidéo panoramique. Cette source VS délivre des données vidéo VD qui sont transmises à un dispositif de montage MC destiné à élaborer un montage VM de ladite vidéo panoramique.

L'équipement E comporte aussi un dispositif de contrôle CTRL destiné à être manipulé par un utilisateur pour définir des commandes de navigation UN au fur et à mesure de la visualisation. Ce dispositif de contrôle est par exemple constitué par une souris.

L'équipement E comporte aussi une source PS de commandes de navigation prédéfinies. Sur la figure 1, cette source PS délivre deux suites de commandes de navigation référencées PN1 et PN2.

Les commandes de navigation UN, PN1 et PN2 sont fournies à un dispositif de sélection SLT. Ce dispositif de sélection reçoit une commande CDE pour sélectionner soit les commandes de navigation UN définies par l'utilisateur, soit l'une quelconque des suites de commandes de navigation prédéfinies PN1 et PN2 fournies par la source de commandes de navigation PS. Le dispositif de sélection SLT fournit ensuite les commandes de navigation sélectionnées au dispositif de montage MC.

La commande CDE est constituée soit par une commande utilisateur, soit par une commande automatique. Lorsque la commande CDE est une commande utilisateur, l'utilisateur peut choisir à tout moment les commandes de navigation à appliquer au dispositif de montage MC. En particulier il a la possibilité de se recentrer sur l'action en utilisant des commandes de navigation prédéfinies. Lorsque la commande CDE est une commande automatique, des commandes de navigation prédéfinies PN1 ou PN2 sont par exemple appliquées à certains instants prédéfinis entre lesquels ce sont les commandes de navigation UN définies par l'utilisateur qui sont appliquées. Ce mode de réalisation permet de fournir à l'utilisateur des guides de navigation au travers du programme de sorte qu'il peut naviguer librement entre certains points de vue imposés afin de modifier son champ de vision. Avantageusement les points de vue imposés correspondent aux événements importants du programme. Ainsi, l'utilisateur ne risque plus de perdre le fil de l'action.

Sur la figure 2 on a représenté un schéma fonctionnel d'un mode de réalisation préférentiel d'un équipement E' selon l'invention. D'après la figure 2, l'équipement E' comporte un récepteur RX pour recevoir des données C4, codées au format MPEG-4, qui représentent ladite vidéo panoramique (MPEG-4 est une norme de codage d'objets audio/visuels définie par l'ISO). L'équipement E' comporte aussi un décodeur MPEG-4 référencé DEC4 pour décoder les données codées C4. Les données décodées D4 délivrées en sortie du décodeur DEC4 sont fournies à un dispositif de montage MC'.

De façon avantageuse, le récepteur RX reçoit aussi des données C7, codées au format MPEG-7, associées aux données C4, et qui contiennent des commandes de navigation prédéfinies (MPEG-7 est une norme de description de contenu vidéo définie par l'ISO, qui définit un certain nombre de descripteurs de contenu vidéo, notamment un descripteur de mouvement de caméra ; conformément à l'invention, les descripteurs de mouvement de caméra contenu dans un fichier MPEG-7 sont avantageusement utilisés comme commandes de navigation prédéfinies). L'équipement E' comporte alors un décodeur DEC7 pour décoder des données C7 et extraire les commandes de navigation prédéfinies. Sur la figure 2, les données C7 sont constituées par deux fichiers MPEG-7 référencés F1 et F2. Ces deux fichiers F1 et F2 sont fournis en entrée du décodeur DEC7. Le décodeur DEC7 décode les fichiers F1 et F2 et en extrait deux suites de commandes de navigation prédéfinies PF1 et PF2. Les deux suites de commandes de navigation prédéfinies sont fournies à un dispositif de sélection SLT'. Le dispositif de sélection SLT' reçoit une commande CDE' pour sélectionner soit les commandes de navigation UN définies par l'utilisateur, soit l'une quelconque des suites de commandes de navigation prédéfinies PF1 et PF2 fournies par le décodeur DEC7. Le dispositif de sélection SLT' fournit ensuite les commandes de navigation sélectionnées à un dispositif de montage MC'.

Sur la figure 3, on a représenté un système de transmission selon l'invention qui comporte :
- un émetteur TX pour émettre des données représentant une vidéo panoramique (par exemple des données codées au format MPEG-4), et des commandes de navigations prédéfinies associées à ladite vidéo panoramique (par exemple un ou plusieurs fichiers au format MPEG-7 qui contiennent de telles commandes de navigation prédéfinies) ;
- un réseau de transport (NET);
- un équipement de visualisation d'un montage d'une vidéo panoramique (par exemple un équipement du type de l'équipement E' décrit en regard de la figure 2).

Dans un autre mode de réalisation de l'invention, non représenté, les données représentant la vidéo panoramique et les commandes de navigation prédéfinies associées sont stockées sur un support (par exemple sur un disque) destiné à être lu par l'équipement de visualisation.

Dans la pratique, l'invention est mise en oeuvre en utilisant des moyens logiciels. Pour cela, un équipement selon l'invention comporte un ou plusieurs processeurs et une ou plusieurs mémoires de stockage de programmes, lesdits programmes contenant des instructions pour la mise en oeuvre des fonctions qui viennent d'être décrite, lorsqu'ils sont exécutés par lesdits processeurs.

## Revendications

1. Equipement (E ; E') de visualisation d'un montage vidéo (VM ; VM') par application de commandes de navigation à une vidéo panoramique, comportant , **caractérisé en ce qu**'il comporte au moins une source (PS ; RX, DEC7) de commandes de navigation prédéfinies (PN1, PN2 ; PF1, PF2) et un dispositif de sélection (SLT ; SLT') pour appliquer à tout moment à la vidéo panoramique (VD ; C4) soit les commandes de navigation prédéfinies (PN1, PN2 ; PF1, PF2) fournies par une source de commandes de navigation prédéfinies (PS ; RX, DEC7), soit les commandes de navigation définies par l'utilisateur (UN).

2. Equipement de visualisation selon la revendication 1, **caractérisé en ce qu**'au moins une source de commandes de navigation prédéfinies est constituée par un fichier (F1, F2) associé à ladite vidéo panoramique (C4) et contenant une suite de commandes de navigation (PF1, PF2) qui correspond à un montage particulier (VM') de ladite vidéo panoramique.

3. Equipement de visualisation selon la revendication 2, **caractérisé en ce que** ledit fichier est un fichier de description de ladite vidéo panoramique dans lequel des paramètres de mouvement de caméra sont définis, lesdits paramètres de mouvement de caméra constituant lesdites commandes de navigation prédéfinies (PF1, PF2).

4. Equipement de visualisation selon la revendication 1, **caractérisé en ce qu**'il comporte un récepteur (RX) pour recevoir ladite vidéo panoramique et des commandes de navigation prédéfinies (F1, F2) associées à ladite vidéo panoramique.

5. Procédé de visualisation d'un montage vidéo par application de commandes de navigation à une vidéo panoramique par un dispositif de contrôle (CTRL) destiné à être manipulé par un utilisateur pour définir des commandes de navigation au fur et à mesure de la visualisation (UN), **caractérisé en ce qu**'il consiste à sélectionner (SLT ; SLT'), pour application à tout moment à ladite vidéo panoramique, soit des commandes de navigation définies par un utilisateur au fur et à mesure de la visualisation (UN), soit des commandes de navigation prédéfinies (PN1, PN2 ; PF1, PF2) fournies par une source de commandes de navigation prédéfinies (PS ; RX, DEC7).

6. Procédé de visualisation selon la revendication 5, **caractérisé en ce que** qu'au moins une source de commandes de navigation prédéfinies est constituée par un fichier (F1, F2) de description de ladite vidéo panoramique dans lequel des paramètres de mouvement de caméra sont définis, lesdits paramètres de mouvement de caméra constituant lesdites commandes de navigation prédéfinies.

7. Programme comportant des instructions pour la mise en oeuvre d'un procédé de visualisation selon l'une des revendications 5 ou 6 lorsqu'il est exécuté par un processeur.

8. Système de transmission comportant au moins un émetteur (TX) destiné à émettre une vidéo panoramique et des commandes de navigation prédéfinies associées à ladite vidéo panoramique, un réseau de transmission (NET) pour transmettre ladite vidéo panoramique et lesdites commandes de navigation prédéfinies associées, et un équipement de visualisation selon la revendication 4 (E').

## Claims

1. Display equipment (E; E') of a video assembly (VM; VM') by the application of navigation commands to a panoramic video, **characterized in that** it comprises at least a source (PS; RX, DEC7) of predefined navigation commands (PN1, PN2; PF1, PF2) and a selection device (SLT; SLT') for applying at any moment to the panoramic video (VD, C4) either the predefined navigation commands (PN1, PN2; PF1, PF2) supplied by a source of predefined navigation commands (PS; RX, DEC7), or the navigation commands defined by the user (UN).

2. Display equipment as claimed in claim 1, **characterized in that** at least one source of predefined navigation commands is formed by a file (F1, F2) associated with said panoramic video (C4) and containing a sequence of navigation commands (PF 1, PF2) which correspond to a particular assembly (VM') of said panoramic video.

3. Display equipment as claimed in claim 2, **characterized in that** said file is a file of the description of said panoramic video in which parameters of camera motion are defined, said camera motion parameters forming said predefined navigation commands (PF1, PF2).

4. Display equipment as claimed in claim 1, **characterized in that** it comprises a receiver (RX) for receiving said panoramic video and predefined navigation commands (F1, F2) associated to said panoramic video.

5. A method of displaying a video assembly by the application of navigation commands to a panoramic video by a control device (CTRL) intended to be manipulated by a user to define navigation commands in accordance with a display (UN), **characterized in that** it comprises selection (SLT; SLT') for application at any moment to said panoramic video, either navigation commands defined by a user for the purpose of the display (UN) or predefined navigation commands (PN1, PN2); PF1, PF2) supplied by a source of predefined navigation commands (PS; RX, DEC7).

6. A display method as claimed in claim 5, **characterized in that** at least a source of predefined navigation commands is formed by a file (F1, F2) of description of said panoramic video in which camera motion parameters are defined, said camera motion parameters forming said predefined navigation commands.

7. A program containing instructions for implementing a display method as claimed in one of the claims 5 or 6 when it is executed by a processor.

8. A transmission system comprising at least a transmitter (TX) intended to transmit a panoramic video and predefined navigation commands associated to said panoramic video, a transmission network (NET) for transmitting said panoramic video and said associated predefined navigation commands, and display equipment as claimed in claim 4 (E').

## Patentansprüche

1. Ausrüstung (E; E') zur Videoeditieranzeige (VM; VM') mit Navigationssteuerungsanwendung zu einem Panoramavideo mit einer Steuerungsvorrichtung (CTRL), dafür bestimmt, von einem Anwender bedient zu werden, um die Navigationssteuerungen im Laufe der Anzeige zu definieren (UN), **dadurch gekennzeichnet, dass** sie mindestens eine Quelle (PS; RX, DEC7) vordefinierter Navigationssteuerungen (PN1, PN2; PF1, PF2) und eine Auswahlvorrichtung (SLT; SLT') enthält, um auf das Panoramavideo (VD; C4) jederzeit entweder die vordefinierten Navigationssteuerungen (PN1, PN2; PF1, PF2), von einer Quelle vordefinierter Navigationssteuerungen (PS; RX, DEC7) bereitgestellt, oder die vom Anwender (UN) definierten Navigationssteuerungen anzuwenden.

2. Anzeigeausrüstung nach Anspruch 1, **dadurch gekennzeichnet, dass** mindestens eine Quelle vordefinierter Navigationssteuerungen von einer Datei (F1, F2) in Verbindung mit dem besagten Panoramavideo (C4) gebildet wird und sie eine Folge der Navigationssteuerungen (PF1, PF2) enthält, die einem besonderen Editieren (VM') des Panoramavideos entspricht.

3. Anzeigeausrüstung nach Anspruch 2, **dadurch gekennzeichnet, dass** die besagte Datei eine Skriptdatei des besagten Panoramavideos ist, der die Parameter der Kamerabewegung definiert sind, wobei die besagten Parameter der Kamerabewegung die besagten vordefinierten Navigationssteuerungen (PF 1, PF2) bilden.

4. Anzeigeausrüstung nach Anspruch 1, **dadurch gekennzeichnet, dass** sie einen Empfänger (RX) für den Empfang des besagten Panoramavideos und der vordefinierten Navigationssteuerungen (F1, F2) in Verbindung mit dem besagten Panoramavideo enthält.

5. Verfahren zur Videoeditieranzeige mit Navigationssteuerungsanwendung zu einem Panoramavideo mit einer Steuerungsvorrichtung (CTRL), dafür bestimmt, von einem Anwender bedient zu werden, um die Navigationssteuerungen im Laufe der Anzeige (UN) zu definieren, **dadurch gekennzeichnet, dass** es jederzeit zur Auswahl (SLT; SLT') steht, auf das besagte Panoramavideo entweder die von einem Anwender im Laufe der Anzeige (UN) definierten Navigationssteuerungen oder die vordefinierten Navigationssteuerungen (PN1, PN2; PF1, PF2), bereitgestellt von einer Quelle vordefinierter Navigationssteuerungen (PS; RX, DEC7) anzuwenden.

6. Anzeigeverfahren nach Anspruch 5, **dadurch gekennzeichnet, dass** mindestens eine Quelle vordefinierter Navigationssteuerungen von einer Skriptdatei (F1, F2) des besagten Panoramavideos gebildet wird, in der die Parameter der Kamerabewegung definiert sind, wobei die besagten Parameter der Kamerabewegung die besagten vordefinierten Navigationssteuerungen bilden.

7. Programm mit Anweisungen für die Umsetzung eines Anzeigeverfahrens gemäß einem der Ansprüche 5 oder 6, wenn es von einem Prozessor ausgeführt wird.

8. Übertragungssystem mit mindestens einem Sender (TX) für die Ausstrahlung eines Panoramavideos und der vordefinierten Navigationssteuerungen in Verbindung mit dem besagten Panoramavideo, einem Übertragungsnetz (NET) für die Übertragung des besagten Panoramavideos und der besagten damit verbundenen vordefinierten Navigationssteuerungen sowie einer Anzeigeausrüstung nach Anspruch 4 (E').
